# EUROPEAN PATENT APPLICATION

(11) **EP 2 790 130 A1**
(43) Date of publication of application: **15.10.2014**
(21) Application number: 13162803.4
(22) Date of filing: 08.04.2013
(51) Int. Cl.: G06K 9/62, G06K 9/52

(54) **Method for object recognition**

(71) Applicant: Cogisen SRL, Napoli (IT)
(72) Inventor: Rijnders, Christiaan Erik, 00135 Roma (IT)
(74) Representative: Leone, Mario

(57) **Abstract**

A method for object recognition is capable to greatly increase the processing speed of object recognition methods, at the same time increasing the accuracy thereof, and comprises the steps of: obtaining a digital image defined through data in a spatial domain; transferring the image data to the frequency domain; applying to the transformed frequency domain one or more sparse zone covering together a fraction of the frequency domain, and a filtering kernel at least partially overlapping said sparse zones; performing a multiplication between the transformed frequency data within each sparse zone and said kernel, combining the results in single values, each representing a corresponding extracted feature; inputting the extracted features in a classifier, therefore obtaining the object recognition; and varying the parameters of said sparse zones and/or the kernel, repeating the process of multiplication and extraction until a predetermined accuracy is achieved.

## Description

### BACKGROUND OF THE INVENTION

### 1. Field of the Invention

The present invention is related to a method for the recognition of object, intended to be used on any kind of device provided with suitable means for digitalizing images, possibly but not exclusively in a digital video stream.

### 2. Description of the prior art

Many methods of this kind are disclosed in the computer vision literature for object recognition and object tracking techniques.

In object recognition, all described methods use several kind of features extracted from the digital images, based on a plurality of methods for extracting these features, which are the roots of the object recognition techniques. Different ways are also known for using such selected features: in most cases, the features are used either for training a classifier or for being correlated between sets of known features in a classifier.

Many methods, such as Viola-Jones, involve the sums within rectangular areas of pixel level information in the spatial domain, which are usually converted to grey-scale to render less heavy the foreseen computations. Taking into consideration the so called weak classifiers, such methods involve a great number of features required to obtain acceptable levels of accuracy, and this large number of features implies the use of numerous search boxes and multiple repetitions of the calculations. Tree-like cascade techniques, such as AdaBoost, are used attempting to speed up the classification, but such methods will remain inherently unsuitable for real-time uses.

Other methods, such as SIFT method (Scale Invariant Feature Transform) do not just use rectangular areas of pixel information to extract features, like Viola-Jones, but vary the shape of the areas in different steps of the method. Such methods are commonly used to recognize objects with varying zooms and changes in points of view. A series of computations are required to map features of the same object to the features of the object seen from different views. Since the features are extracted from the spatial domain, such object recognition calculations are usually computationally very intensive.

Other methods, often used for the recognition of the head orientation or the capturing of emotion on a face, extract geometrical points from a digitalized frame. They rely on the correlation or on the correspondence between these points and a predetermined 3D shape model. Examples of these methods are known such as the Active Shape models and the Active Appearance models. Such feature points are usually extracted within the spatial domain, for example by enhancing contrasts within the image. To extract such point, a first step is provided using classifiers. For example, in case of face recognition, classifiers will be likely required for both the face and the eyes. Once these features have been classified, and the position of facial features are estimated with a reasonable confidence as well, in a next step the geometric points can be extracted from the image, and then in turn correlated to a 3D shape model. It can be easily understood that these methods also inherently require heavy calculations, not suitable for real-time applications.

In conclusion, all the above methods, which only use the spatial domain image information, can have just a little scope for substantial speed improvements.

Methods for the object recognition belonging to the prior art may also use the so called filtering kernels, shortly kernels, in the frequency domain to first accentuate characteristics of the object to be classified and then recognized. Then, the features that are extracted after the use of a kernel can either be the results of the sums of pixels in the transformed image or the sums of cells in the frequency domain.

Said kernels operated as filters in the frequency domain will be hereinafter explained and detailed.

Most of such methods use a pre-defined series of kernels evenly distributed in the frequency domain. An example of this technique is represented by the use of Gabor banks. Each kernel setting results in a different transformed image. The features extracted in such methods are typically the values of coordinates within the transformed image. These coordinates are those of the pixels in the spatial domain of the transformed image, which have the highest value of pixel intensity. Typically, around forty different Gabor filters are used in such methods. Since the full frequency domain calculations are performed, and a transformation is required each time from spatial domain to frequency domain and then back again from frequency domain to spatial domain, such methods also require a large number of calculations.

Further, such methods often use variations of the Fast Fourier Transformation (FFT), which requires the input images to be re-sampled.

Methods for the object tracking are usually based on a first step of object recognition using a method similar to the ones mentioned above. Then, the dynamics of the movement of the object on the screen can, after the object recognition, be modeled and followed by commonly used methods such as for example Hidden Markov Models.

However, it is also possible to track objects on a screen without classification or object recognition. For example, object tracking can be done with template matching in the spatial domain or with a kernel trained to accentuate the chosen object in the frequency domain.

Another disadvantage in commonly used methods is that their designers have no control of or an insight to the logic of how the features and classifiers are created and how to improve the results. The designer cannot basically know which features are helping classification and which of them have to be considered noise for the classifier. Simply adding extra images to the training set, or adding extra features from each image, not only the calculations are even more slowed down, but also the problem of an over-fitting may arise, with the accuracy of the classifiers for recognizing objects worsening by these extra features instead of being improving. Such methods hardly succeed to adapt, to follow and to take advantage of the latest hardware developments such as multi-core processing or advances in GPU technology.

### SUMMARY OF THE INVENTION

Nowadays, object recognition techniques in image processing are being widely applied in various contexts. By way of example and with no limitative purpose, this recognition is utilized in face tagging technology on social networks, software for the recognition of hand gestures, software for the recognition of body movements, face recognition technology for augmented reality, interfaces which use head orientation tracking, object tracking technology for security systems and gaze tracking technology.

Mostly, there are still specific hardware solutions for such object recognition products; for example gaze tracking and the recognition of gestures are technologies that often require either integrated infrared projectors or extra cameras for stereo vision to obtain the required accuracy.

Such object recognition solutions are often also characterized by heavy algorithms, which require huge amounts of processing power.

There is a clear future trend of all these object recognition technologies migrating onto the next generation of interactive interfaces and operating systems. Such novel devices can be represented by smartphones, tablets, wearable hardware such as interactive glasses, but also any kind of interactive objects in future homes, offices or public places. These devices can be provided for special uses such as interactive television or intelligent homes, and they can also be used in automotive safety and assisted driving systems, next to many other possible uses.

The implementation of such technology is not limited to mobile devices, but it can be basically integrated in any device or network connected device, where re-programmable hardware is used with algorithms on them and where video camera inputs can be added.

Adding extra hardware to devices, purely to help the functioning of object recognition algorithms, implies higher costs and extra battery drain. Plus, there are high research and development costs required to create the miniature hardware, with current state-of-the-art hardware still being too large to be integrated into mobile or other small devices.

Beside the hardware costs, to a large degree, what is hindering the mass scale use of object recognition technology on, for example, mobile hardware platforms is that the required object recognition calculations are too slow and use too much of the available processing power.

Therefore, before implementation on the next generation of operating systems and devices become feasible in mass volumes, such object recognition technology first will require software-only solutions able to process images much faster than in the current state of the art.

This migration towards software-only solutions is also being facilitated by continuous camera technology improvements, which bring increasingly higher frame rates, better motion processing, better color highlighting, better adaptation to contrasts, better adaptation to light changes and increasingly higher screen resolutions.

This trend will only increase the effectiveness of software-only solutions for the object recognition, thus making it possible to remove the need for infrared projectors or extra cameras for stereo vision.

However, the current object recognition algorithms implemented in software-only solutions still will lead to limited implementation in object recognition methods and products in the state of the art.

The need for object recognition to use as little processing power as possible is intended for both saving battery life as well as for the requirement for real-time use. Real-time algorithms, such as face recognition and eye tracking, should produce more user friendly and natural devices. While running in real-time, object recognition algorithms also need to run in the background without limiting the main processes running in the foreground.

Further, it should be noted that the required amount of calculations may exponentially grow as the input image size increases. A rise in video frame rate would also mean that there would be less time for the object recognition algorithms to finish the calculations before the next video input frame arrives.

Therefore, a side effect of the increasingly high video frame rates and growing input image quality is that current common object recognition algorithms, which already often need to down-sample input images to achieve acceptable processing speeds, will need to increasingly down-sample input images.

Such down-sampling thereby negates a large part of the advantages of having such high definition images in input for object recognition.

In addition, object recognition methods are required in a full mobility environment, meaning that they can be used in everyday situations without the need for constant calibrations and without the requirement for relatively little movement between the user to the camera. This full mobility use accentuates the need for object recognition solutions which are fully software based, which can run in real-time and which do not down-sample the input video stream.

As mentioned above, to achieve object recognition applications desirable to the users, they need to work in real-time. For example, there is a great difference in subjective feeling between a gaze tracking or head tracking application running at 2 Hz or at 30 Hz. Only after having brought the processing speeds of object recognition algorithms to real time speed, such technology will be able to receiving a large acceptance by users and to be feasible as a standard feature in the next generation of operating systems.

It is also not acceptable to count on the continued improvement of processing power, since battery power needs to be saved in any case and for all applications, e.g. for games, scale to use the maximum of processing power, therefore always leaving a minimal amount for algorithms such as standard image processing to run in the background.

Another reason for the need of fast algorithms is that object recognition solutions must account for a future developments race in computer vision, which will be to have increasing layers of algorithms with adaptation, learning and memory. Practically, all computer vision current methods are passive, with no reasoning. To reach such added layers of adaptive algorithms, the only solution is the base algorithms to be as fast as possible.

The object recognition algorithms will also need to be fast enough to recognize several objects simultaneously.

Therefore, the only realistic option to obtain the required acceleration in object recognition processing speed in image processing calculations on a mobile device or other devices, using a fully software solution is with the use of sparse zones for the frequency domain calculations.

This invention is applicable where kernels are used in the frequency domain. It is not applicable to methods that are based on the analysis of pixel information in the spatial domain without transforming the image data into frequency domain.

Generically, the method of the present invention can have three applications:
1) Classification of objects using features extracted in the spatial domain, which have been obtained by transforming the original image into the frequency domain, multiplying this transformed image information by a kernel in the frequency domain and then transforming the result of the multiplication back to the spatial domain.
2) Classification of objects using features extracted in the frequency domain, which have been obtained by transforming the original image to the frequency domain and multiplying this transformed image information by a kernel in the frequency domain.
3) Tracking of objects using information in the spatial domain which have been obtained by transforming the original image to the frequency domain, multiplying this transformed image information by a kernel in the frequency domain and then transforming the result of the multiplication back to the spatial domain.

Here, it is directly intended that the simple tracking of an object in a wide environment with the use of a correlation filter need not the filtering kind of kernel use intended hereinafter, while the true object tracking, where in each frame the object is classified and then for each frame the position of the recognized objected is tracked, leads to application of this invention in the first two cases for accelerating calculations.

It will be clear to a man skilled in the art of object recognition that the three applications of the invention are not necessarily separate, however they can overlap themselves and then to be used for more accelerations of calculations at the same time.

For example, if to classify an object should be necessary, such as a face in a video stream, after using a kernel to get an initial estimation of its position on the screen, in this case an acceleration can be achieved in the calculations for both the object tracking and the face recognition.

Another example might be represented by an object in a video stream needing to be tracked, generically classified in the frequency domain and then classified in more detail within the spatial domain with higher accuracy. An implementation of this example could be a security system tracking and estimating the position of a face on a video input stream, and then using a classifier to extracts facial features and then another classifier to extract eye details for identification of the person captured by the video stream.

All above three applications for accelerating object recognition calculations share the use of kernels in the frequency domain, since the acceleration in calculation speed is obtained within the frequency domain calculations.

This method is especially applicable in situations where specific object in an image need to be recognized and followed. Examples of this could be face recognition, the tracking of the direction of eye gaze and the recognition of gestures.

Summarizing, there is a felt need for full mobility, software-based object recognition solutions which can continuously run in real-time on mobile devices, or network connected device where re-programmable hardware is used with algorithms on them, and where video camera inputs can be added.

The technical problem at the root of the present invention is to provide an object recognition method apt to satisfy the needs related to the above explained drawbacks recognizable in the state of the art.

This problem is solved by a method for object recognition as above specified, comprising the steps of:
- obtaining a digital image defined through data in a spatial domain;
- transferring the image data to the frequency domain;
- applying to the transformed frequency domain one or more sparse zone covering together a fraction of the frequency domain, and a filtering kernel at least partially overlapping said sparse zones;
- performing a multiplication between the transformed frequency data within each sparse zone and said kernel, combining the results in single values, each representing a corresponding extracted feature;
- inputting the extracted features in a classifier, therefore obtaining the object recognition; and
- varying the parameters of said sparse zones and/or the kernel, repeating the process of multiplication and extraction until a predetermined accuracy is achieved.

Further features of the method, leading to additional advantages, are defined in the dependent claims.

The present method is hence capable to greatly increase the processing speed of object recognition methods, at the same time increasing the accuracy thereof.

As above explained, a huge need is felt for new methods able to increase the speed of object recognition techniques in image processing. This speed increase should render the object recognition fast enough to work in the background inside the latest generation of mobile devices and other similar devices, for example wearable computing such as interactive glasses or watches.

Apart from use on the latest generation of mobile devices, in anticipation for future trends such as wearable hardware, the algorithms need to be able to work outside of the main personal computer operating systems and mobile operating systems and thus be programmable on processors and re-programmable hardware such as field-programmable gate arrays. The methods also need to be built up of algorithms, which can take advantage of the latest hardware developments on personal computers and mobile devices such as multi-cores and powerful graphical processing units (GPU's).

In this connection, the use of calculations in the frequency domain naturally lends itself to respond to the need for faster calculations for several reasons.

Among these reasons, working with images in the frequency domain involves that every pixel in the image within the spatial domain contributes to each single value in the frequency domain. Therefore, a sparse area in the frequency domain contains a relatively large amount of information compared to a similar sized zone within the image in the spatial domain.

This means that in the frequency domain the amount of features required for classification, if well chosen, is lower than would relatively be the case in the spatial domain.

Working in the frequency domain also allows for much easier calculations as multiplications with filters, and other similar calculations with matrices are of the cell-by-cell kind, unlike the spatial domain, where each row of a matrix must be multiplied with all the columns of the matrix.

Therefore, in the frequency domain it is easy to use a sparse, small, part of the frequency domain information for object recognition. The acceleration in calculations in frequency domain is directly proportional to how small the sparse zone is made. For example, using a sparse zone that contains 1/100 of the frequency domain information results in object recognition calculations, which are 100 times faster in that part of the frequency domain calculations.

Sparse zones, as well as the kernels operated as filters in the frequency domain, will be hereinafter explained and detailed.

Working fully in the frequency domain without requiring the calculations to transform the image back to the spatial domain after the frequency domain calculation also allows an added flexibility in the choice of the mathematics that perform the transformation into the frequency domain. For example, the use of a 2D variant of the Görtzel algorithm becomes a realistic option. This gives an extra possible acceleration in calculations, next to the acceleration in calculations given when using the sparse zones.

### BRIEF DESCRIPTION OF THE DRAWINGS

Further features and advantages of the present method will become more apparent by the following description of a preferred embodiment thereof, given by reference to the annexed drawings wherein:
- Figure 1 shows a flow diagram illustrating the initialization of the method according to the present invention;
- Figures 2a and 2b show together a flow diagram wherein an accelerated sparse calculation is illustrated;
- Figure 3 show the same method for acceleration in calculations in the frequency of Figures 2a and 2b, which can be used for different applications;
- Figure 4 show another flow diagram where the method according to the invention is illustrated with no limit to the amount of classes to define for the acceleration of calculations in the frequency domain;
- Figure 5 shows an outline illustrating an off-line learning of the present method, wherein classes are created for the acceleration of calculations in the frequency domain;
- Figure 6 shows a flow diagram illustrating an optimization loop for a single class of eye images;
- Figures 7a and 7b show together a real-time re-training process for object recognition; and
- Figures 8a and 8b show together a real-time re-training process for object tracking.

### DESCRIPTION OF THE EMBODIMENTS

In the following, an embodiment of the method as defined above will be detailed with reference to the accompanying figures.

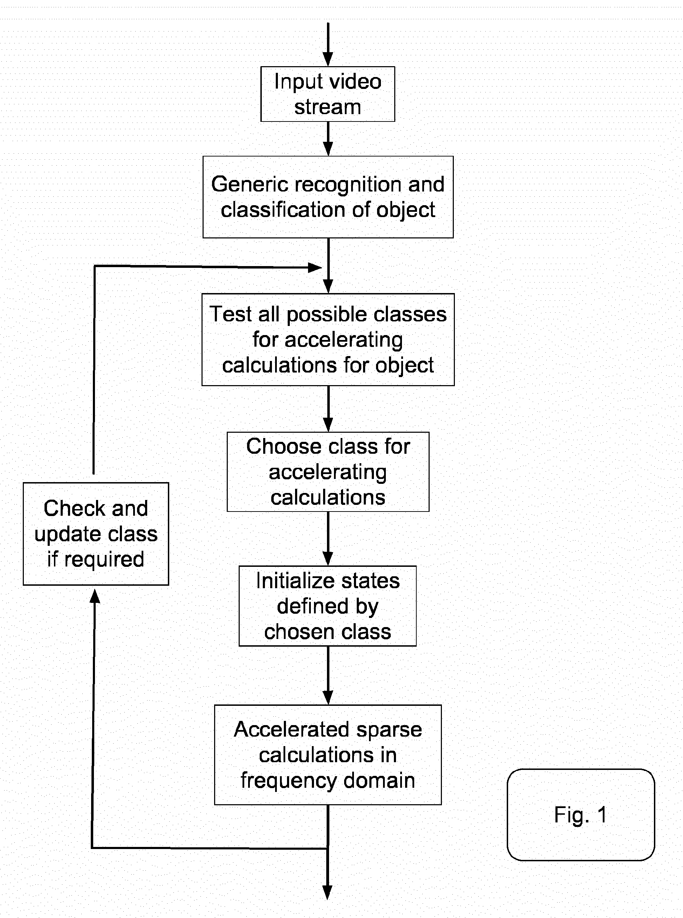

The high-level initialization of an accelerated sparse calculation in the frequency domain follows the general outline of Figure 1, where an input video stream containing the object that needs to be tracked, for example a face or an eye, is represented.

At the beginning, the whole frequency spectrum is used to get a first recognition of the object. Once the object has been recognized, a number of pre-defined classes are tested in parallel. The most appropriate of this multitude of classes is chosen for the object. This most appropriate class allows for accelerated calculations without a loss of accuracy for the object.

With class is meant a set, a collection or group, or a configuration containing elements regarded as having certain attributes or traits in common, i.e. a kind or category.

These classes are primarily defined in an offline phase. For eye tracking or head tracking, such states for example can be defined by a combination of lighting conditions, the orientation relative to the camera or the ethnicity characterizing the eye or face to be tracked.

The chosen class defines the ranges of a number of parameters used for accelerating the calculations, such as the sparse frequency zone, the chosen features, the kernel values and the internal classifier settings.

At this point the slower, generic, recognition and classification is replaced by the chosen accelerated calculations.

In real-time used with video, there can be numerous external variables, for example changing lighting, therefore there is a check if the chosen class is still the most appropriate. The class is followed and adapted when necessary. This following and adapting of states need not be done at the frame rate of the video stream. Neither all the states need to be checked again after the initialization. For example, in the use of eye tracking, the type of eye might be considered a constant and it is only checked if the state, which defines the lighting conditions changes.

For the changing classes due to variations in lighting, note that they are largely defined by the image sensor in the video camera used for the image stream. Common current image sensors are for example digital charge-coupled device (CCD) or complementary metal-oxide-semiconductor (CMOS) active pixel sensors. Each design of image sensors reacts in a number of pre-defined ways to changing light conditions such as contrast, low light, bright sunlight and so forth. Thus, the classes, which define light changes, are mainly linked to the way the image sensors react to light changes.

Converting an image to the frequency domain is well established, being a discrete rather than a continuous 2-dimensional Fourier transformation. The Fourier Transform is used in a wide range of applications, such as image analysis, image filtering, image reconstruction and image compression, text orientation finding and more.

The main principle is described by Discrete Fourier Transformation (DFT). Since the DFT requires a great number of calculation, there are many other types of transformations which seek to speed up the process. The Fast Fourier Transformations (FFT) is the most established of these, being an efficient algorithm to compute the discrete Fourier transform (DFT) and its inverse. However there are a number of variations of the FFT. The FFT also has its limitations in image processing. For example, the sides of the image used in input for the FFT need to have lengths in pixels which are a power of two, and the full FFT needs to be calculated before results for a certain frequency can be given. This places certain requirements on memory with the FFT. The FFT cannot be converted for sparse calculations, since the entire FFT must be calculated before the value for a single frequency can be obtained. The complex structure of the FFT does not allow for easy coding implementations on re-programmable hardware and multi-core processors. In addition, since the entire FFT first needs to be calculated to obtain single results it also requires higher use of memory on the device.

Methods such as *pruned* Fast Fourier Transformations exist but they require a great deal of complex code for a minimal gain in speed and memory use.

In the frequency domain of an image, each point represents a particular frequency contained in the spatial domain image.

The frequency spectrum is a plot of the energy against spatial frequencies, where the spatial frequencies relate to the spatial relations of intensities in the image.

The Discrete Fourier Transformation (DFT) is the sampled Fourier Transform and therefore does not contain all frequencies forming an image, but only a set of samples that is large enough to fully describe the spatial domain image. The number of frequencies corresponds to the number of pixels in the spatial domain image, i.e. the images in the spatial and Fourier domain are of the same size.

The Fourier Transform produces a complex number valued output image which can be displayed with two images, either with the real and imaginary part or with magnitude and phase. In image processing, often only the magnitude of the Fourier Transform is displayed, as it contains most of the information of the geometric structure of the spatial domain image. However, to re-transform the Fourier image into the correct spatial domain after some processing in the frequency domain, one must preserve both magnitude and phase of the Fourier image.

In the spatial domain, the values are usually the light intensity of the grey scale pixels, which range from 0 to 255. The Fourier domain image values have a much greater range than the image in the spatial domain. Hence, to be sufficiently accurate, the values in the frequency domain are usually calculated and stored as float values.

When classifying objects using the information in the frequency domain, without the need to return to the spatial domain, there are several advantages.

First, the lack of an extra step back to the spatial domain from the frequency domain speeds up the calculations.

Second, since the frequency domain values need not to be converted back to a correct spatial domain image, smaller sparse zone can be used. This is because it is not required to have the minimum amount of frequency domain data that will allow for the image data to be converted back to the spatial domain without a large loss of image quality and information. Sparse zones in the frequency domain by themselves do not necessarily contain enough frequency domain information to recreate the spatial image. But they do contain enough information for image classification and gaze direction information.

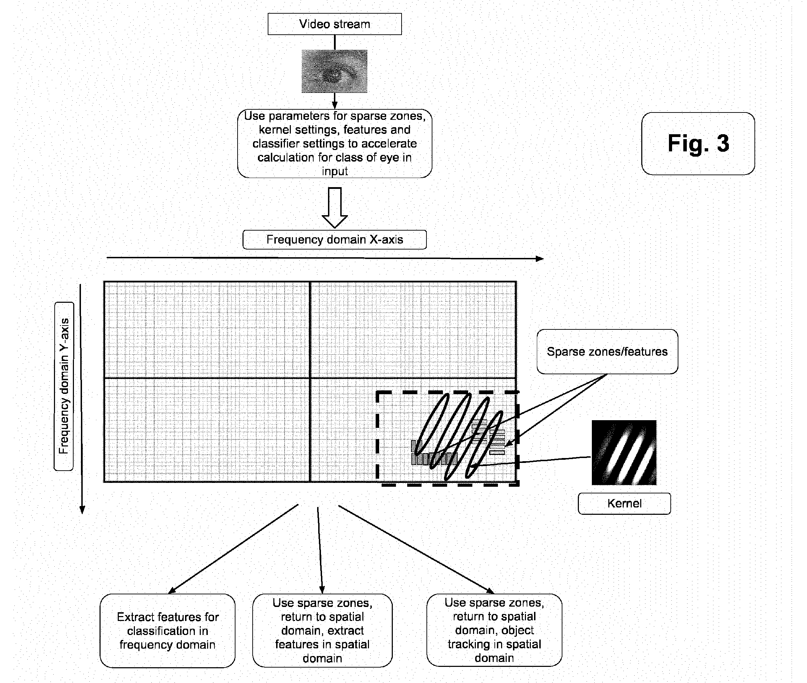

Here and in the following description, a sparse zone is meant to be one or a group of zones, i.e. one or more, covering a fraction of a frequency domain. Each zone should be seen as a frequency interval, possibly defined through intervals on the axis of abscissae and of the ordinates (see Figure 3) if the sparse zone is squared or rectangular, but a zone of many other shapes may be used, i.e. defined by a closed line in the frequency domain.

The assembly of the sparse zones covers a part, i.e. a fraction of the overall frequency domain resulting from the transformation of the spatial domain. Each of the sparse zone encircles frequency data transferred from the spatial domain.

Conveniently, the sparse zones may be grouped together, either possibly partially overlapping each other or placed side-to-side, to increase the local resolution. Calculations on frequency values derived from said sparse zone are indicated as sparse calculations.

Third, since it is not required to convert the image back to the spatial domain, it opens to the possibility to use other methods besides DFT or FFT to convert the image into the spatial domain, since it is not necessary to have the full real and imaginary information in the frequency domain, but the magnitude can suffice. Hence, the transformation may be carried out using further methods such as a two-dimensional version of the Görtzel algorithm, which can be set up sparse, more flexible for use on re-programmable processors, using a minimal amount of memory, more flexible to code for parallel use on multiple processor cores.

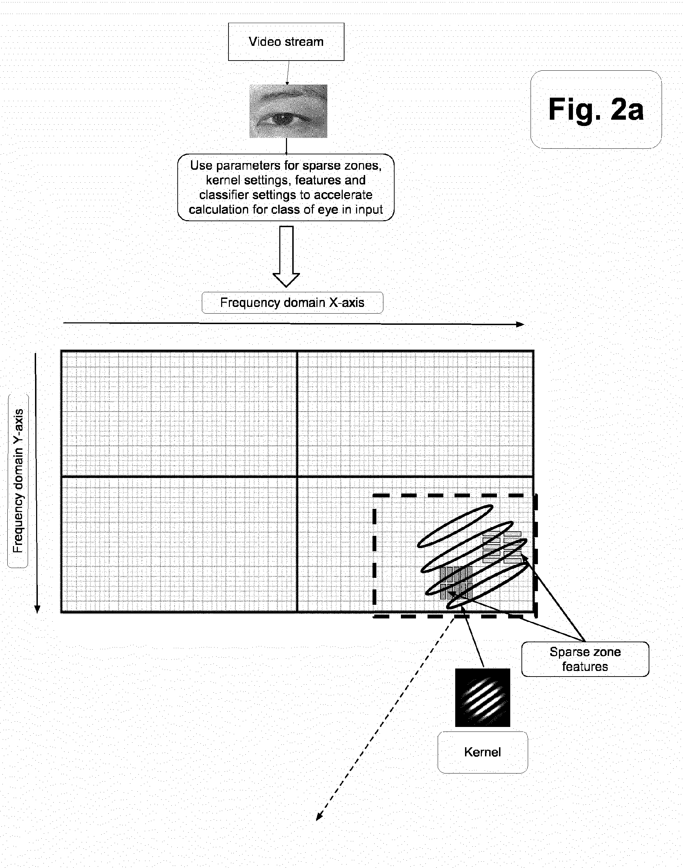

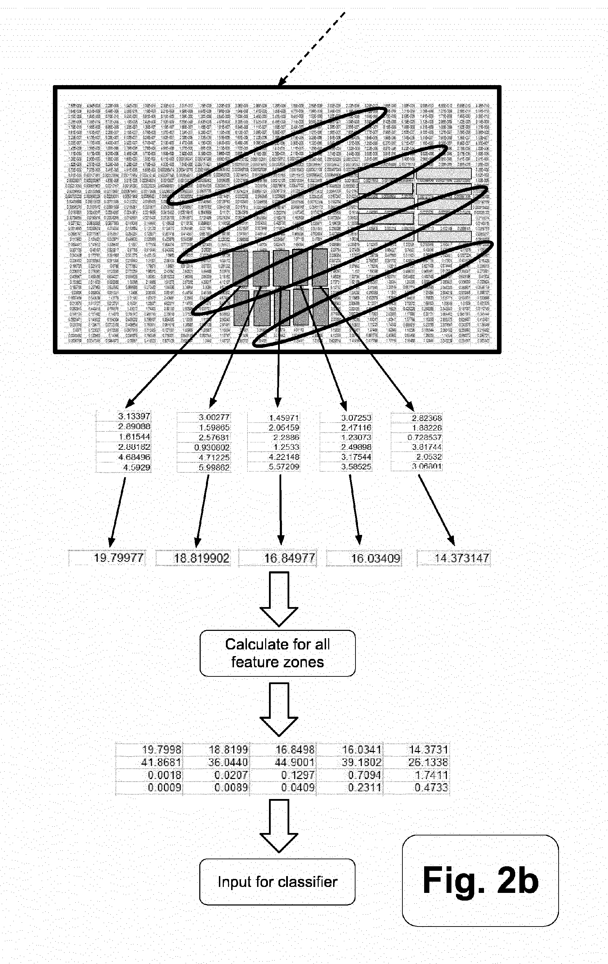

With reference to Figures 2a and 2b, it can be seen in more detail how such an accelerated sparse calculation might be done for each single frame of a real-time video stream.

The example in Figures 2a and 2b applies in the case of accelerated calculations using classification of objects with features extracted in the frequency domain.

In the example of Figures 2a and 2b, the frame of the input image and the kernel each are 64x64 in size in the frequency domain.

The values of the kernel are a magnitude for each cell depending on the calculated real and imaginary components of the kernel in the frequency domain. Taking the magnitude of these complex numbers, multiplied with the magnitudes resulting from the image transformed into the frequency domain, then together gives the shown 64x64 grid of values.

Kernel is meant to be any kind of filter in frequency domain, to be applied to the sparse zones as defined above.

Such filter can be an edge detection linear filter, a Gabor filter (mixed Gaussian and Sinusoid), a Gaussian filter, an intensity enhancing filter, a lowpass filter, a Sobel edge detection filter, another edge operator like Canny, Canny-Deriche, Differential Sobel, Prewitt, Roberts, Cross, a corner detection operator like Harris operator, Shi and Tomasi, Level curve curvature, SUSAN, FAST and many others.

In the following, a Gabor filter by way of example.

The example in Figures 2a and 2b is done for an eye, but it will be clear that the same principle can be used with other objects.

As described in Figure 1, after the class of the object has been determined, the parameters for accelerating the calculations in the frequency domain have been set. These parameters, among others, are the sparse areas in the frequency domain, the chosen kernel weights, the chosen features and the settings for the classifiers.

In the example, only two sparse ranges with features are used for extracting such features. An example of a chosen kernel can also be seen. A zoom between Figures 2a and 2b figure shows in more detail the area of the sparse calculations.

It will be clear to a man skilled in the art that in the case of full cell-by-cell multiplications between the image in frequency domain and the kernel that 64*64=4096 calculations are required.

Here, cell is intended to be the frequency value of the sparse zone resulting from the corresponding spatial domain through said transformation.

In the example, the calculation for five of the features is seen. The numbers in the cells are the results in the frequency domain of the multiplication between the magnitude at that frequency of the image converted into the frequency domain and the kernel magnitude at that same frequency. The value for a single feature is the sum of the values in the feature zones.

Repeating this for each feature zone results in twenty features. These features are then the input for the classifiers, for recognition of the original object.

It will be clear to an expert in the field of frequency domain calculations that if only the calculations within the feature zones are required, only a small part of the calculations are required and that the gain in speed is proportional to the size feature sparse zones. In other words, if only 1% of the frequencies are required, there will be a 100-fold speed increase in these frequency domain calculations.

It will also be clear to experts in the field of frequency domain calculations that taking the sum of the values in the feature zones using a single kernel is just one of many options for creating features to use as an input for classifiers.

A multitude of combinations of features, kernels, classification settings and such are possible. Figures 2a and 2b only shows two features zones and a single kernel as an illustrative example, to highlight the manner in which the acceleration in calculations in the frequency domain is obtained.

The key is to find the best trade-off with a combinations of features, kernels, classification settings that will give both classification accuracy and classification speed.

In any case, in each application of the method, even if the optimal trade-off for both calculation speed and accuracy is found, the acceleration of the calculations will be obtained.

In view of the above, in the method for object recognition, in order to have it accelerated, a multiplication is performed between the transformed frequency data within each sparse zone and said kernel Then the various results thereby obtained are combined in single values, each representing a corresponding extracted feature.

The extracted figures are hence inputted in a classifier, obtaining the object recognition therethrough in a direct manner. After the parameters of said sparse zones and/or the kernel are varied
repeating the process of multiplication and extraction until a predetermined accuracy is achieved for the above features.

Figure 3 continues with the example of Figures 2a and 2b, considering that the underlying principle can be used for any object. First, it is possible to see that, for a different type of eye in Figures 2a and 2b, a different class of eye is chosen for accelerating the calculations. Compared to the class eye in Figures 2a and 2b, there are different sparse zones, different features and a different kernel for each class. As previously mentioned, there are also other parameters that can be chosen differently such as the classifier settings.

In Figures 2a and 2b an example was given for using the method for accelerating calculations in the frequency domain when extracting features in the frequency domain.

Instead, in Figure 3, it is shown how the same method for acceleration in calculations in the frequency domain can be used for the above cited three different applications, i.e. classification using features extracted in the frequency domain, features extracted in the spatial domain after passing through frequency domain kernels and object tracking in the spatial domain after passing through frequency domain kernels.

For the present method, the greatest potential gain is obtained in the accelerating the computing in the frequency domain using features extracted in the frequency domain, since there is not only the advantage of the acceleration due to the use of sparse zones. However, the step back calculation to the spatial domain is avoided. Thus, faster and more flexible methods for transferring an image than FFT and DFT maybe used too. The use of dynamic sparse zones, which accelerate the calculations, achieves the requested accuracy avoiding to return to the spatial domain. For example, the speed of the calculations allows for multiple checks to avoid false positives and allows for real-time re-training of the classifiers. The speed of the calculations also allows for features to be taken dynamically with respect to the time, so that the features are taken over for their classification a only for a number of frames, instead of frame by frame.

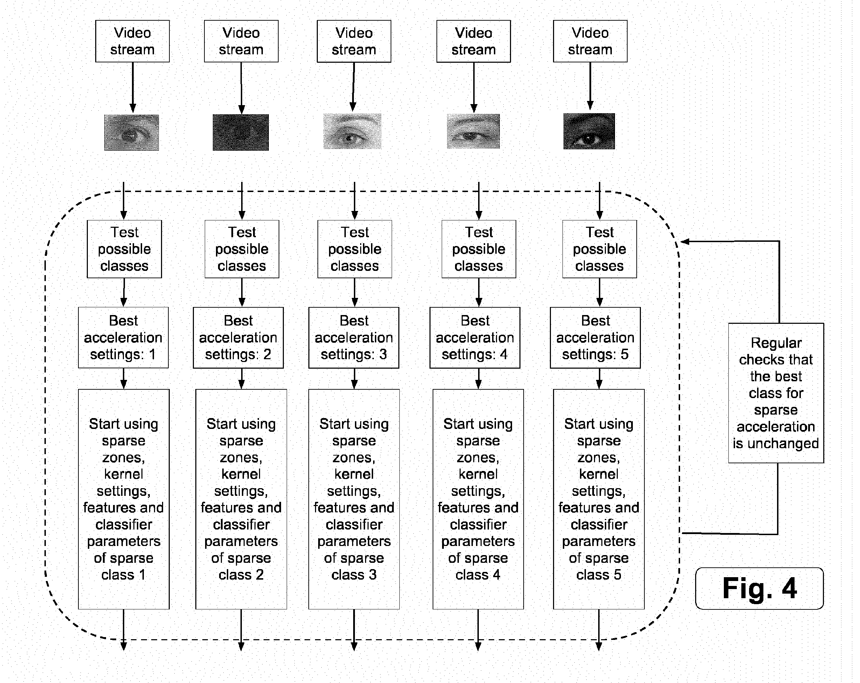

With reference to Figure 4, it is illustrated how there is no limit to the amount of classes, which can be defined for the acceleration of the calculations in the frequency domain. For each generic type of eye a class can be defined and also for the same type of eye, e.g. for a different lighting thereof. More classes do not slow down calculations in real-time uses, since after choosing the initial class only the parameters from a single class are used for accelerating the calculations in the frequency domain. With a fast calculations for each class it is also possible to have several classes checked in parallel during the initialization phase or a regular intervals during real-time running. In addition, with real-time object recognition at a high frame rate, using the acceleration in calculations an extra robustness in object recognition can be achieved since, the dynamics of the object recognition results can be followed instead of individually analyzing each frame of the video.

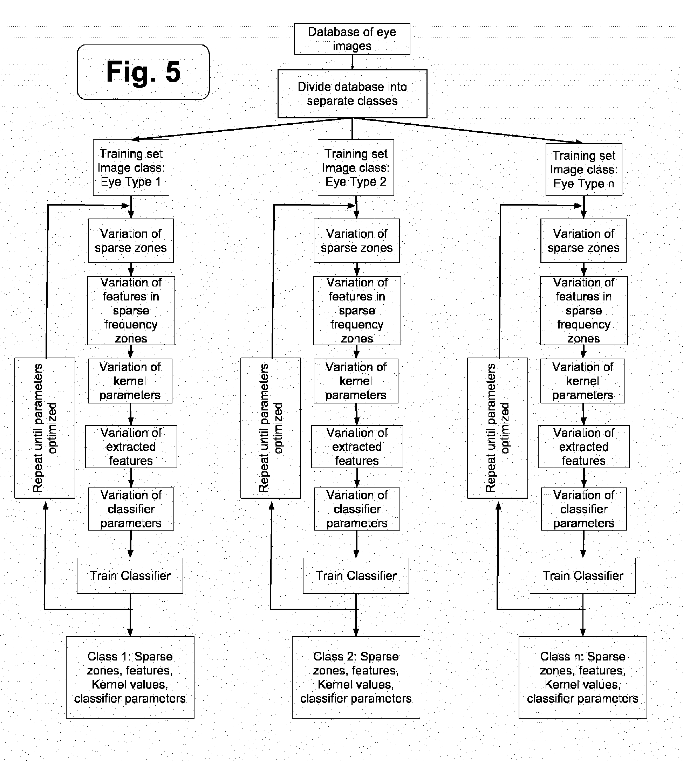

In connection with Figure 5 an off-line learning is outlined, to create the classes for the acceleration of calculations in the frequency domain.

It is apparent that the offline learning step starts with the creation of a database of the type of images to be classified or tracked, in this case eyes. The images in the database are then divided into the separate classes, for example on the basis of lighting conditions or ethnicity of the eye. Each of these classes are now the input for separate optimization loops.

A plurality of parameters in each optimization for each class are now varied until, for each classes, an acceptable compromise is found, i.e. a predetermined accuracy. These parameters can be related to the sparse zones, the features extracted, the kernel settings and amount of kernels used, and the classifier settings. The optimization seeks a compromise within multiple targets, among those the classification percentage, the achieved acceleration in the frequency domain and no overlapping in classification results between the classes.

It is noted that the diagram of Figure 5 is given for the application of the acceleration when using the extraction of features in the frequency domain. The same generic principle can also be used when optimizing the settings for the classes either when using the method to accelerate the extraction of features in the spatial domain when passing through a kernel or when the tracking of the object in the spatial domain after passing through a kernel in the frequency domain. What will change in these cases is that there will be a different parameters chosen to optimize and a different compromise chosen, for example in the compromise also the loss of data when converting back to the spatial domain might become an optimization parameter.

From Figure 5 it will also be clear that this method allows for engineering flexibility and transparent designs of object recognition solutions. For example, if there is a class that shows worse performance in object recognition or object tracking, then the optimization only for this class needs to be re-done without affecting the other classes. Alternatively, if there is a new type of class, such as for example a different type of eye with glasses on in a particular light, then only the optimization needs to be performed for this new class so that the latter can finally join the other classes that are checked during the initialization for the accelerated calculations.

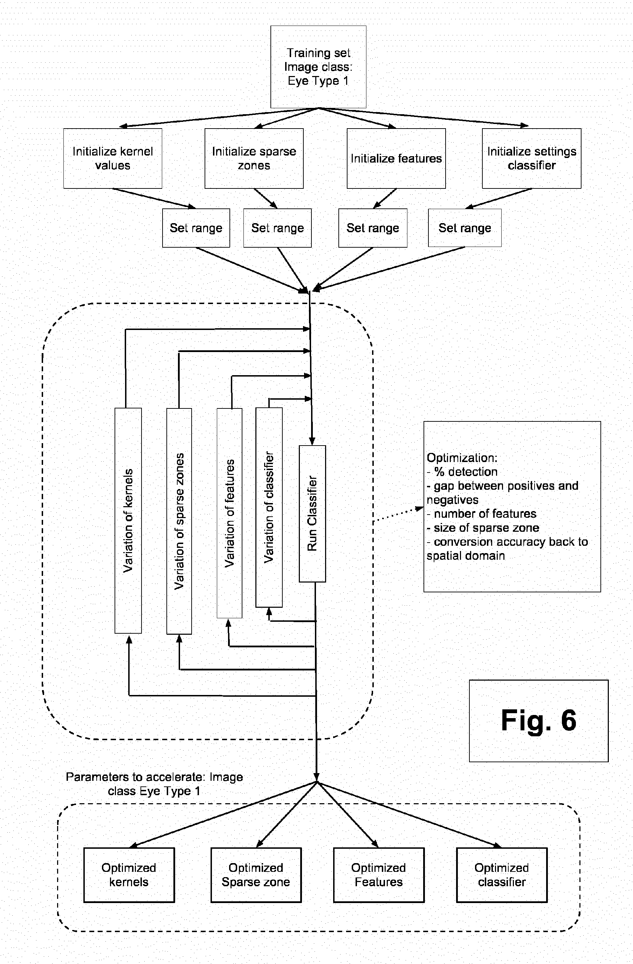

The described offline optimization loop in Figure 5 for creating the classes, which define the acceleration in the frequency domain, is given in more detail in Figure 6. The optimization loop is described for a single class of eye images. The same type of optimization loop will also be used be the multiple of classes shown for example in Figure 4 and Figure 5 or other classes that can be defined in a similar way.

The optimization starts with the training set, which is extracted from the database of images, as described at the top of Figure 5.

In the next steps, the parameters to be optimized are chosen and initialized, and the ranges for the parameters are set. In the example of Figure 6, the parameters shown are the values of the kernel, the sparse zones, the extracted features and the classifier settings; the choice of these settings depends on the type of acceleration sought in the frequency domain.

Further, it is apparent that there are also higher order design options for the parameters. For example, the sparse zones can be set square or rectangular or event of a different shape; as for the kernel, the kernel parameters could be changed using a filter described with a mathematical formula, such as a Gabor filter or a multiple of Gaussian filters. Such parameter could for example be wavelength, phase and orientation. Alternatively, the individual kernel values within the sparse zones can be directly varied although these values are the output of a mathematically defined filter.

It should be noted that a number of combinations between kernels and features are possible, and that the chosen features and kernels can overlap each other. It is also clear that the kernels, whose result from this optimization are not pre-defined such as in methods similar to Gabor banks, will be different for each class for accelerating calculations.

Then, with such sparse calculations there is a minimal extra cost when using different kernels for different sets of features within the defined sparse zones. Next, the optimization loop begins with the chosen parameters being varied within the set ranges.

The ideal result is not necessarily the accuracy of the final object classification or object tracking, but a trade-off that is set for the optimization. For example, it would be desirable to achieve high levels of classification which using the smallest possible sparse zones and minimal amount of features. In other words, the desired trade-off achieves an accurate classification and object tracking while also achieving the highest possible acceleration of calculations, all while maintaining a solution that allows a real-time adaptation. Other trade-offs can be defined for the same generic structure of Figure 6. It will also be clear that all parameters of the optimization need not necessarily to be used to achieve acceptable results. It will also be clear that the whole optimization need not be repeated every time. For example, the settings of a previous class could be the starting point for the optimization of a new class, or when a class is updated with new images in the training set, only part of the optimization will need to be rerun, starting from the previous optimization results.

Figure 5 and Figure 6 describe the offline learning process for creating the classes to accelerate calculations in the frequency domain. And Figure 1, Figure 2, Figure 3 and Figure 4 describe the online process to accelerate calculations using the created classes. Mixed uses are also possible, where the classes are trained in an offline phase but there is also partly re-training in real-time.

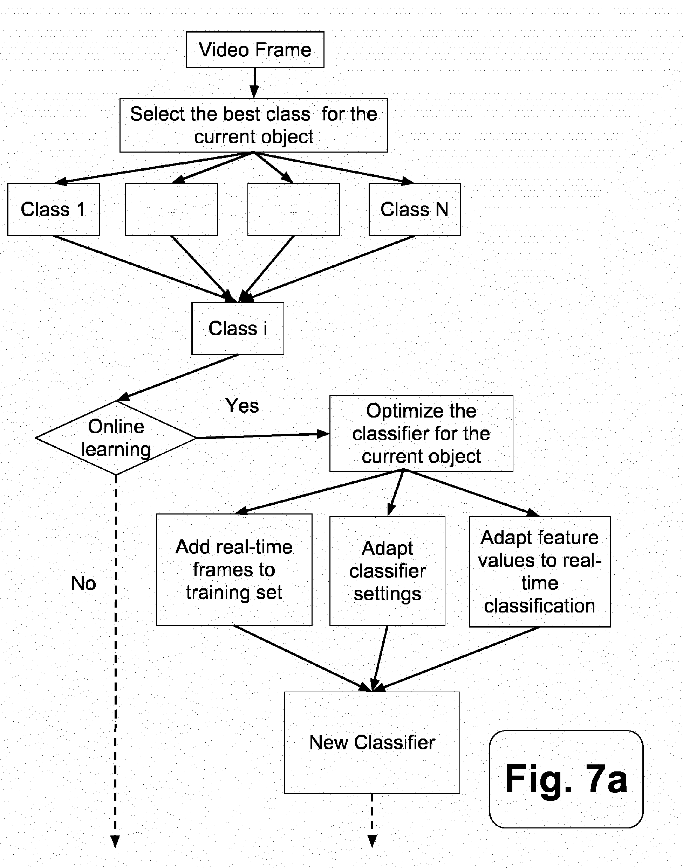

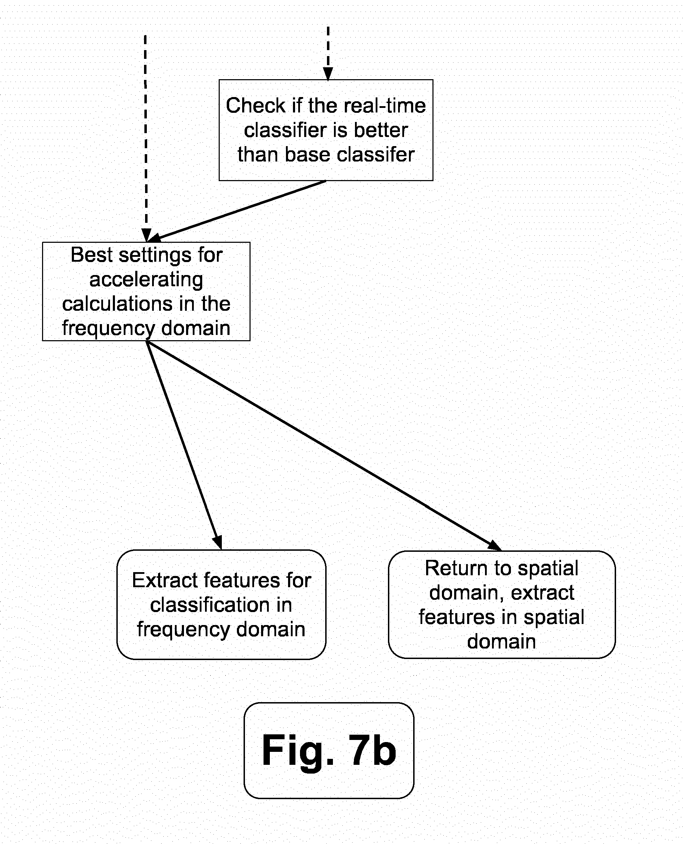

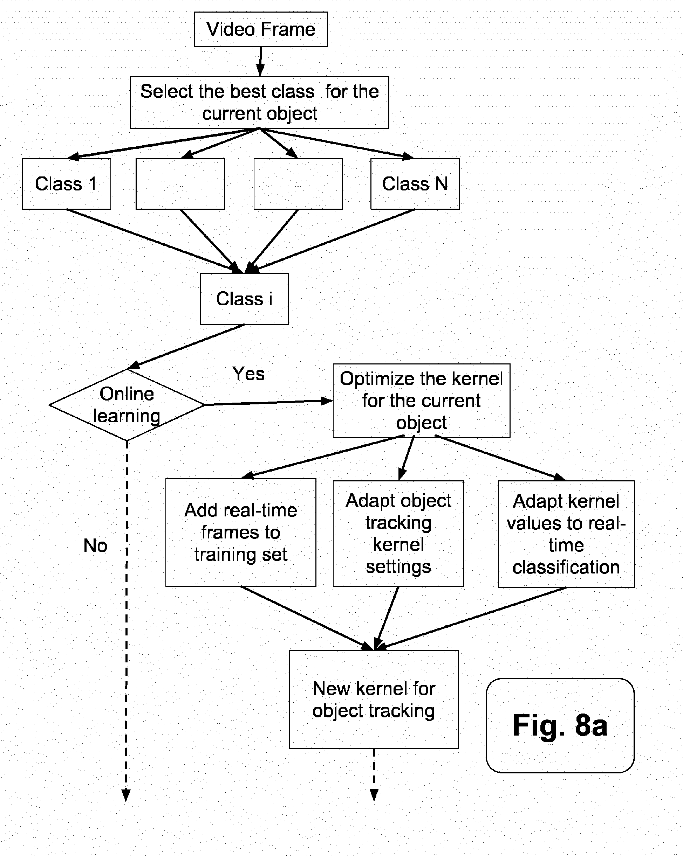

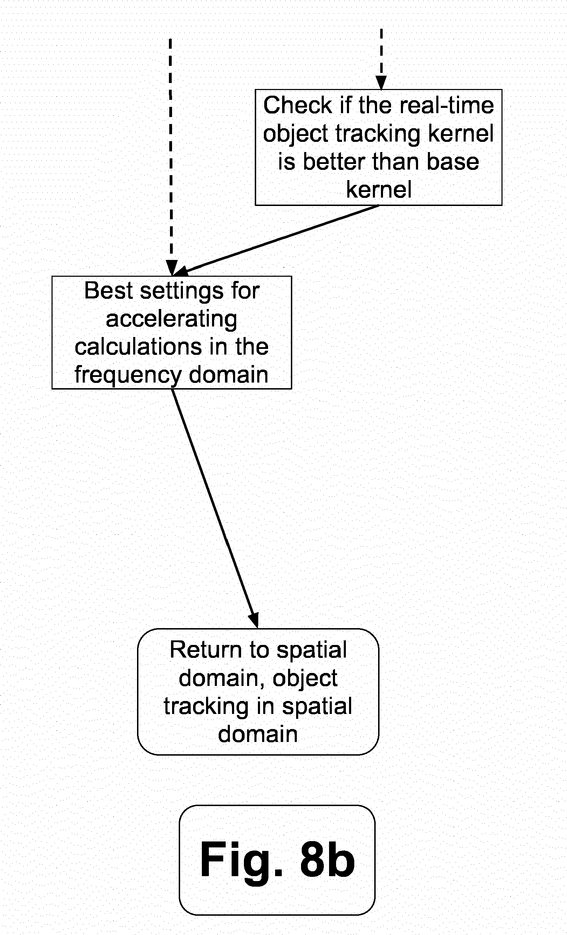

In Figure 7, a real-time re-training for object recognition is shown, and in Figure 8 a real-time re-training for object tracking is shown.

In both Figures 7 and 8, the most appropriate class is determined for accelerating calculations for the chosen object. Then, in each case the possibility is given to re-train the class for the specific object.

It might be the case that correctly the generic class of Asian eyes in partial sunlight has been chosen for the specific eye. To make the class more specific for the chosen eyes, one can then add frames from real-time and re-train the classifier.

The classifier is just one of the parameters to accelerate the calculations, next to the kernel values, sparse zones, chosen features, classifier settings and more. It will be clear that the whole offline optimization process cannot be repeated in real-time. Anyway, well chosen features resulting from the offline optimization mean that a limited number of features suffice for the classifier, and the classifier settings themselves need not be too complex. In this case, re-training the classifier, using the original training set augmented with extra frames extracted in real-time from the actual eye, becomes feasible in real-time, as shown in Figure 7.

The same principle can also be used to re-train in real-time the kernel used for estimation and tracking, as shown in Figure 8.

Summarizing, the method according to the invention is performed with calculations in the frequency domain using only use a small, sparse, part of the frequency domain. The initialization phase is carried out with a number of classes in parallel, to determine the most appropriated class and from this the most appropriated parameters such sparse zones, kernels, classifier settings and features for accelerating the calculations in the frequency domain while maintaining the accuracy.

Different parameters are dinamically used for accelerating calculations in the frequency domain according to changes in the class of the object being tracked. These classes can for example by defined by shapes, type of eyes or facial features. These classes can also be defined by other factors such as light intensity, zoom and so forth.

## Claims

1. Method for object recognition, comprising the steps of:
• obtaining a digital image defined through data in a spatial domain;
• transferring the image data to the frequency domain;
• applying to the transformed frequency domain one or more sparse zone covering together a fraction of the frequency domain, and a filtering kernel at least partially overlapping said sparse zones;
• performing a multiplication between the transformed frequency data within each sparse zone and said kernel, combining the results in single values, each representing a corresponding extracted feature; and
• inputting the extracted features in a classifier, therefore obtaining the object recognition; and
• varying the parameters of said sparse zones and/or the kernel, repeating the process of multiplication and extraction until a predetermined accuracy is achieved.

2. Method according to claim 1, wherein, the extracted features are varied within the classifier, to update the features in the classifier.

3. Method according to claim 2, wherein the classifier is varied, to update the classifier.

4. Method according to claim 1, wherein the step of transferring the image data to the frequency domain is performed by a Discrete Fourier Transformation.

5. Method according to claim 1, wherein the step of transferring the image data to the frequency domain is performed by a Fast Fourier Transformation.

6. Method according to claim 1, wherein the step of transferring the image data to the frequency domain is performed by a Görtzel algorithm.

7. Method according to claim 1, wherein the single values are sum of values within a sparse zone.

8. Method according to claim 1, wherein, having a plurality of given sparse frequency zones, kernels, features and classifiers, the related calculations are done in parallel.

9. Method according to claim 1, wherein said kernel comprises a two dimension filter, e.g. a Gabor filter

10. Method according to claim 1, wherein the digital image is the frame of a video stream.
